# EUROPEAN PATENT APPLICATION

(11) **EP 4 306 994 A1**
(43) Date of publication of application: **17.01.2024**
(21) Application number: 22778556.5
(22) Date of filing: 15.03.2022
(51) Int. Cl.: G01S 7/481, G01S 17/42

(54) **LASER EMISSION METHOD AND APPARATUS, DETECTION APPARATUS AND MOBILE PLATFORM**

(30) Priority: 29.03.2021 CN 202110336412
(71) Applicant: Huawei Technologies Co., Ltd., Longgang Shenzhen, Guangdong 518129 (CN)
(72) Inventor: GUO, Jiaxing, Shenzhen, Guangdong 518129 (CN); PAN, Wenqiang, Shenzhen, Guangdong 518129 (CN)
(74) Representative: Goddar, Heinz J.
(86) International application number: PCT/CN2022/080945
(87) International publication number: WO 2022/206373

(57) **Abstract**

This application discloses a laser emitting method and apparatus, a detection apparatus, and a mobile platform, which are applied to self-driving or assisted driving. The laser emitting apparatus includes a light beam generation apparatus and an optical assembly. The light beam generation apparatus is configured to generate a first light beam and a second light beam, where the first light beam is incident to the optical assembly and is emitted from the optical assembly, the second light beam is incident to the optical assembly and is emitted from the optical assembly, and a first spot formed by the first light beam in space and a second spot formed by the second light beam in space are separated in a horizontal direction. Because the two spots emitted by the laser emitting apparatus are separated in the horizontal direction, echoes of the two spots are also separated in the horizontal direction accordingly. This helps avoid a problem of generating a symmetric ghost image, thereby helping provide recognition precision of a laser radar. The laser emitting apparatus may be applied to the internet of vehicles, for example, vehicle-to-everything V2X, long term evolution-vehicle LTE-V, and vehicle-to-vehicle V2V.

## Description

### CROSS-REFERENCE TO RELATED APPLICATIONS

This application claims priority to Chinese Patent Application No. 202110336412.2, filed with the China National Intellectual Property Administration on March 29, 2021 and entitled "LASER EMITTING METHOD AND APPARATUS, DETECTION APPARATUS, AND MOBILE PLATFORM", which is incorporated herein by reference in its entirety.

### TECHNICAL FIELD

This application relates to the field of optical detection technologies, and in particular, to a laser emitting method and apparatus, a detection apparatus, and a mobile platform.

### BACKGROUND

A laser radar detects features such as a position, a shape, and a speed of a target object by transmitting a laser signal. A scanning laser radar is a mainstream laser radar, and common display modes include mechanical rotation scanning, polygon (polygon) scanning, optical phased array scanning, and the like.

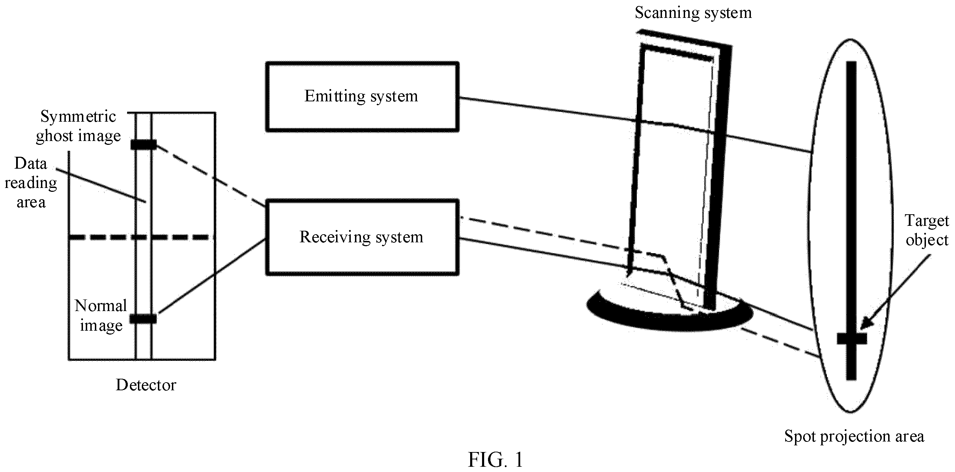

The scanning laser radar usually emits linear spots in a scanning manner, to detect a target object in a specific area. The scanning laser radar usually includes an emitting system, a scanning system, and a receiving system. However, due to reflection of a scanning system component and reflection of a receiving system component, a "ghost image" that is symmetrical to a normal image of the target object with respect to a centrosymmetric axis of the detector may exist on a detector of the receiving system. For example, in a scenario shown in FIG. 1, for spots reflected by a target object, some spots are normally received by a receiving system through a scanning system, and some spots are projected onto a base of the scanning system, and are reflected by the base, so that the spots are received by the receiving system through the scanning system. After being reflected by the base, these spots that are reflected by the base are separated from an imaging area of a normal spot, thereby forming a symmetric ghost image.

Existence of the symmetric ghost image affects recognition of a target object by the laser radar. Therefore, to improve accuracy of laser radar recognition, a problem of a symmetric ghost image in an imaging process needs to be resolved.

### SUMMARY

Embodiments of this application provide a laser emitting method and apparatus, a detection apparatus, and a mobile platform, to resolve a problem of a symmetric ghost image in a laser radar imaging process.

According to a first aspect, an embodiment of this application provides a laser emitting apparatus, including a light beam generation apparatus and an optical assembly. The light beam generation apparatus is configured to generate a first light beam and a second light beam, where the first light beam is incident to the optical assembly and is emitted from the optical assembly, the second light beam is incident to the optical assembly and is emitted from the optical assembly, and a first spot formed by the first light beam in space and a second spot formed by the second light beam in space are separated in a horizontal direction. Because the first light beam and the second light beam that are emitted by the laser emitting apparatus are separated in the horizontal direction, echoes of the two light beams are also separated in the horizontal direction. Therefore, a problem of generating a symmetric ghost image can be avoided while a detection angle requirement in a vertical direction is ensured, thereby helping provide recognition precision of a laser radar.

In a possible implementation, the first light beam and the second light beam belong to a same beam, that is, the first light beam and the second light beam are simultaneously emitted. A conventional laser radar emits a light beam, and a field of view of the light beam in the vertical direction is a field of view of the laser radar. However, in this embodiment of this application, a field of view formed by both the first light beam and the second light beam in the vertical direction is a field of view of the laser emitting apparatus. In addition, because the first light beam and the second light beam are simultaneously emitted, the first light beam and the second light beam may be considered as a same beam. Because the first light beam and the second light beam that are simultaneously emitted are separated in the horizontal direction, a problem of generating a symmetric ghost image is avoided.

In a possible implementation, the light beam generation apparatus includes a first light beam generation apparatus and a second light beam generation apparatus; the first light beam generation apparatus includes a first laser light source, and the first laser light source includes at least one laser, to generate the first light beam; and the second light beam generation apparatus includes a second laser light source, and the second laser light source includes at least one laser, to generate the second light beam. In this implementation, the first light beam may be generated by at least one laser, and the second light beam may also be generated by at least one laser, and lasers used to generate the first light beam and the second light beam are different. In this case, light intensity of the first light beam and the second light beam can be effectively ensured, and the first light beam and the second light beam are generated by using different lasers, so that light splitting does not need to be performed on light beams generated by a same laser by using an optical splitter, thereby reducing complexity of an optical path design.

In a possible implementation, the optical assembly includes a first collimator and a second collimator; the first light beam is incident to the first collimator from a first position, and the first position is located on a focal plane of the first collimator; the second light beam is incident to the second collimator from a second position, and the second position is located on a focal plane of the second collimator; and the first position is located above or below a focus of the first collimator, and/or the position is located above or below a focus of the second collimator. In this implementation, a principle that when a light beam is incident to a collimator at different positions, emergence angles of the light beam in a fast axis direction are different is used to change an angle of spread of the first light beam and/or an angle of spread of the second light beam in the horizontal direction, so that the first beam and the second beam are separated in the horizontal direction.

The first collimator and the second collimator can collimate a light beam in the horizontal direction, and can further adjust an angle of spread of the light beam in the horizontal direction. Optionally, the first collimator and the second collimator may be fast axis collimators.

In a possible implementation, the optical assembly includes a reflective prism, the second light beam is incident to a right-angle edge of the reflective prism, and the second light beam is not perpendicular to the right-angle edge. In this implementation, a principle that when a light beam is incident to a reflective prism, emergent angles of the light beam in a fast axis direction are different is used, to change an angle of spread of the second light beam in the horizontal direction, so that the first beam and the second beam are separated in the horizontal direction.

In a possible implementation, the first optical assembly further includes a first wedge prism and a second wedge prism; and the first wedge prism and the second wedge prism are configured to splice the first light beam and the second light beam in a vertical direction. Due to various limitations on an optical path design, there may be a gap between the generated first light beam and the generated second light beam in the vertical direction, or the fields of view of the first light beam and the second light beam are adjusted to respective preset fields of view, but there are excessive overlapping parts. Consequently, a field of view obtained after the first light beam and the second light beam are spliced is less than a preset field of view. The wedge prism may be configured to adjust an emergent angle of a light beam in the vertical direction, and a tilt angle of the wedge prism is designed based on incident positions of the first light beam and the second light beam, so that there is no gap between the formed first spot and the formed second spot in the vertical direction, thereby avoiding a case in which some areas cannot be scanned when a target object is scanned, or avoiding a case in which a required field of view cannot be met due to excessive overlapping parts.

In a possible implementation, the optical assembly further includes a homogenizer. The first light beam is incident to the homogenizer and is emitted from the homogenizer, and the second light beam is incident to the homogenizer and is emitted from the homogenizer. Light intensity of a light wave emitted by a laser is different at different positions, and the light intensity of the light wave at different positions can be approximately the same by using the homogenizer, and this helps prevent the first spot and the second spot from exceeding the preset field of view in the vertical direction.

In a possible implementation, a splicing field of view of the first spot and the second spot in the vertical direction is 25 to 30 degrees.

In a possible implementation, a difference between an angle of spread of the first spot and an angle of spread of the second spot in the horizontal direction is 0.3 to 0.6 degrees.

According to a second aspect, an embodiment of this application provides a detection apparatus, where the detection apparatus includes the laser emitting apparatus according to any one of the implementations of the first aspect.

In a possible implementation, the detection apparatus further includes a receiving apparatus. The receiving apparatus includes a detector. The detector includes a first effective area and a second effective area, the first effective area and the second effective area respectively correspond to an imaging area of an echo of the first spot on the detector and an imaging area of an echo of the second spot on the detector, and the first effective area and the second effective area are separated in a horizontal direction. The first effective area and the second effective area respectively correspond to the imaging area of the echo of the first light beam and the imaging area of the echo of the second light beam. Because the first light beam and the second light beam are separated in the horizontal direction, the first effective area and the second effective area are correspondingly separated in the horizontal direction. The first effective area and the second effective area are separated in the horizontal direction, so that the first effective area and the second effective area avoid an imaging area of a symmetric ghost image. Further, a target object is identified based on collected data of the first effective area and the second effective area, which helps improve recognition precision of a laser radar.

According to a third aspect, an embodiment of this application provides a mobile platform, including the detection apparatus according to the second aspect and any one of the implementations.

According to a fourth aspect, an embodiment of this application provides a laser emitting method, applied to a laser emitting apparatus. The laser emitting apparatus includes a light beam generation apparatus and an optical assembly, and the method includes: The light beam generation apparatus generates a first light beam and a second light beam, where the first light beam is incident to the optical assembly and is emitted from the optical assembly, the second light beam is incident to the optical assembly and is emitted from the optical assembly, and a first spot formed by the first light beam in space and a second spot formed by the second light beam in space are separated in a horizontal direction.

In a possible implementation, the first light beam and the second light beam belong to a same beam.

In a possible implementation, the first light beam and the second light beam are generated by different lasers.

In a possible implementation, the optical assembly includes a first collimator and a second collimator; and that the first light beam is incident to the optical assembly includes: the first light beam is incident to the optical assembly from above or below a focus of the first collimator; and/or the second light beam is incident to the optical assembly includes: the second light beam is incident to the optical assembly from above or below a focus of the second collimator.

Optionally, the first collimator and the second collimator may be fast axis collimators.

In a possible implementation, the optical assembly includes a reflective prism; and that the second light beam is incident to the optical assembly includes: the second light beam is not perpendicular to a right-angle edge of the reflective prism.

In a possible implementation, the optical assembly further includes a first wedge prism and a second wedge prism; and that the first light beam is incident to the optical assembly includes: the first light beam is incident to the first wedge prism; and that the second light beam is incident to the optical assembly includes: the second light beam is incident to the second wedge prism.

In a possible implementation, the optical assembly further includes a homogenizer.

In a possible implementation, a splicing field of view of the first spot and the second spot in a vertical direction is 25 to 30 degrees.

In a possible implementation, a difference between an angle of spread of the first spot and an angle of spread of the second spot in the horizontal direction is 0.3 to 0.6 degrees.

### BRIEF DESCRIPTION OF DRAWINGS

FIG. 1 is a schematic diagram of imaging of a symmetric ghost image according to an embodiment of this application;
FIG. 2 is a schematic diagram of a structure of a laser emitting apparatus according to an embodiment of this application;
FIG. 3 is a schematic diagram in which a first spot and a second spot are separated in a horizontal direction according to an embodiment of this application;
FIG. 4(a) and FIG. 4(b) are schematic diagrams of optical paths of a fast axis collimator according to an embodiment of this application;
FIG. 5(a) and FIG. 5(b) are schematic diagrams of optical paths of a reflective prism according to an embodiment of this application;
FIG. 6 is a schematic diagram in which a first spot and a second spot are separated in a horizontal direction by using a reflective prism according to an embodiment of this application;
FIG. 7 is a schematic diagram in which a first spot and a second spot are spliced in a vertical direction according to an embodiment of this application;
FIG. 8 is a schematic diagram of a field of view of a first spot and a second spot in a vertical direction according to an embodiment of this application;
FIG. 9 is a schematic diagram of a homogenizing effect according to an embodiment of this application;
FIG. 10 is a schematic diagram of an optical path of a specific embodiment according to an embodiment of this application;
FIG. 11 is a schematic diagram of an optical path of another specific embodiment according to an embodiment of this application;
FIG. 12 is a schematic diagram of a first effective area and a second effective area of a detector according to an embodiment of this application;
FIG. 13 is a schematic diagram of a scanning spot according to an embodiment of this application;
FIG. 14 is a schematic diagram of a structure of a mobile platform according to an embodiment of this application; and
FIG. 15 is a schematic flowchart of a laser emitting method according to an embodiment of this application.

### DESCRIPTION OF EMBODIMENTS

To make the objectives, technical solutions, and advantages of this application clearer, the following further describes this application in detail with reference to the accompanying drawings.

Embodiments of this application provide a laser emitting apparatus, a detection apparatus, and a mobile platform, to resolve a problem of a symmetric ghost image in a laser radar imaging process. The laser emitting apparatus provided in embodiments of this application may be applied to the detection apparatus, for example, a laser radar, to avoid impact of the symmetric ghost image on target recognition.

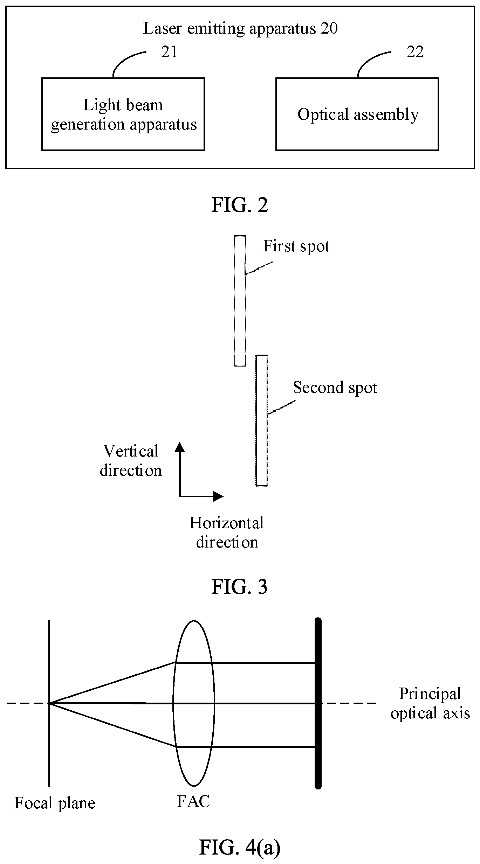

A laser emitting apparatus 20 provided in an embodiment of this application may be shown in FIG. 2, and includes a light beam generation apparatus 21 and an optical assembly 22.

Specifically, the light beam generation apparatus 21 is configured to generate a first light beam and a second light beam. Both the generated first light beam and the generated second light beam are incident to the optical assembly 22 and are emitted. The first light beam is emitted from the optical assembly 22 to form a first spot in space, the second light beam is emitted from the optical assembly to form a second spot in space, and the first spot and the second spot are separated in a horizontal direction. Specifically, the first spot and the second spot formed by the first light beam and the second light beam may be shown in FIG. 3.

This embodiment of this application is particularly applicable to a scanning laser radar. The first spot and the second spot may be linear spots and are parallel to each other. Generally, a linear spot used for scanning is a linear spot in a vertical direction in spatial coordinates, and scanning is performed in a horizontal direction in the spatial coordinates during scanning. Therefore, the horizontal direction in this embodiment of this application may be understood as a scanning direction, or may be understood as a direction perpendicular to the first spot and the second spot. For another example, when the optical assembly 22 is used as a reference standard, the horizontal direction may alternatively be understood as a fast axis direction of the optical assembly 22. It should be understood that the "horizontal direction" in this embodiment of this application is not limited to the horizontal direction in the spatial coordinates. For example, if the first spot and the second spot are linear spots in the horizontal direction in the spatial coordinates, and scanning is performed in a vertical direction in the spatial coordinates, the first spot and the second spot may alternatively be separated in the vertical direction in the spatial coordinates.

Further, the first light beam and the second light beam belong to a same beam. In other words, the laser emitting apparatus 20 simultaneously emits the first light beam and the second light beam. In a conventional scanning laser radar, at a moment, a linear spot is projected onto a target object, and a field of view of the spot in the vertical direction is a field of view of the laser radar; and at different moments, an emergent angle of the linear spot (namely, an angle of spread of the spot in space) is adjusted, to change a position onto which the linear spot is to be projected in the target object, thereby implementing scanning on the target object. In this embodiment of this application, one continuous linear spot is replaced with two linear spots, that is, the laser emitting apparatus 20 may emit two spots at a same moment, and scanning on the target object can be implemented by using the two spots separated in the horizontal direction. A field of view jointly formed by the first spot and the second spot in the vertical direction is a field of view of the laser emitting apparatus. Therefore, the first light beam and the second light beam may be considered as a same beam. Two light beams separated in the horizontal direction are simultaneously emitted, which helps avoid a problem of generating a symmetric ghost image.

In a possible implementation, the optical assembly 22 may include a first collimator 221 and a second collimator 222. The collimator may have a function of converting a generated light beam into a collimated light column, that is, make a formed spot closer to a straight line. However, in this embodiment of this application, in addition to collimating the emitted spot, the first collimator 221 and the second collimator 222 may further have a function of separating the formed first spot and the formed second spot in the horizontal direction. For example, the first collimator 221 and the second collimator 222 may be fast axis collimators (fast axis collimators, FACs).

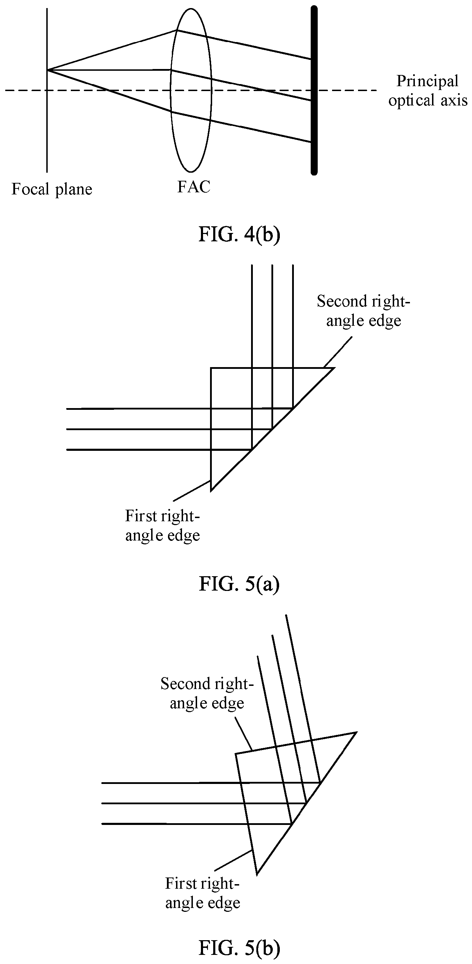

Specifically, as shown in FIG. 4(a), an incident light beam is located at a focus of a fast axis collimator, and the light beam is incident to the fast axis collimator in parallel to an optical axis of the fast axis collimator. In this case, after being emitted by the fast axis collimator, the light beam is parallel to a principal optical axis in a horizontal direction. On the basis of FIG. 4(a), after the fast axis collimator is moved up and down, or a position of the incident light beam is moved on a focal plane, after the light beam is emitted by the fast axis collimator, the light beam is no longer parallel to the principal optical axis in the horizontal direction, as shown in FIG. 4(b). In FIG. 4(a) and FIG. 4(b), the horizontal direction is a direction parallel to the paper, and a vertical direction is a direction perpendicular to the paper.

For example, the first collimator 221 and the second collimator 222 are fast axis collimators. The first light beam may be incident, in parallel to a principal optical axis of the optical assembly, to the first collimator 221 from a focus of the first collimator 221, and the second light beam may be incident, in parallel to the principal optical axis, to the second collimator 222 from a focus above or below a focal plane of the second collimator 222. Because an angle of spread of the first light beam in the horizontal direction does not change, but an angle of spread of the second light beam in the horizontal direction changes, the emitted first light beam and the emitted second light beam are separated by a specific angle in the horizontal direction. The specific separation angle is related to an incident position of the second light beam relative to the second collimator 222. Alternatively, the first light beam may be incident, in parallel to a principal optical axis, to the first collimator 221 from a focus above or below a focal plane of the first collimator 221, and the second light beam may be incident, in parallel to the principal optical axis, to the second collimator 222 from a focus of the second collimator 222, that is, the angle of spread of the first light beam in the horizontal direction changes, but the angle of spread of the second light beam in the horizontal direction does not change. In this way, the first spot and the second spot can be separated in the horizontal direction. Alternatively, the first light beam may be incident to the first collimator 221 from above (or below) a focus on a focal plane of the first collimator 221, and the second light beam may be incident to the second collimator 222 from below (or above) a focus on a focal plane of the second collimator 222, so that the angles of spread of the first light beam and the second light beam in the horizontal direction change, and the first spot and the second spot can be separated in the horizontal direction.

In another possible implementation, the optical assembly 22 may alternatively include a reflective prism 223, and the first spot and the second spot are separated in the horizontal direction by using the reflective prism 223. Specifically, as shown in FIG. 5(a), if a light beam is emitted into a reflective prism in a direction perpendicular to a first right-angle edge of the reflective prism, an emergent light beam of the light beam is emitted in a direction perpendicular to a second right-angle edge of the reflective prism. As shown in FIG. 5(b), if an incident light beam is not perpendicular to the first right-angle edge of the reflective prism, an emergent light beam of the incident light beam is also not perpendicular to the second right-angle edge of the reflective prism.

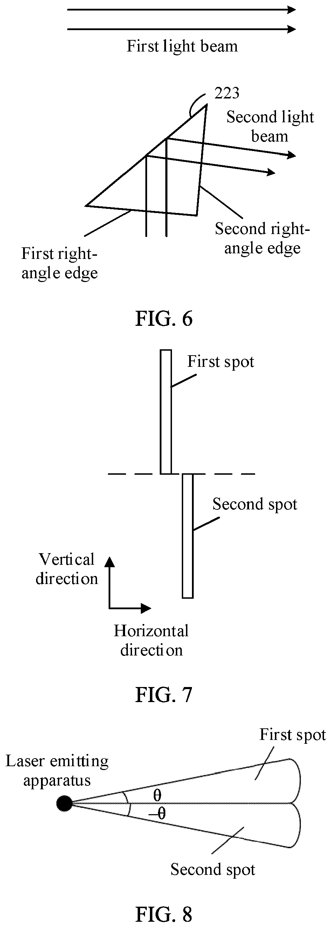

In a specific embodiment shown in FIG. 6, the first light beam may be set in parallel to the principal optical axis of the optical assembly without passing the reflective prism, and the second light beam is set perpendicular to the principal optical axis. If a first right-angle edge of the reflective prism 223 is perpendicular to the second light beam, the second light beam is parallel to the principal optical axis after being emitted. In FIG. 6, because the first right-angle edge of the reflective prism 223 is not perpendicular to the second light beam, a light beam obtained by emitting the second light beam through the reflective prism 223 is not perpendicular to a second right-angle edge of the reflective prism 223, that is, the second light beam is not parallel to the principal optical axis in the horizontal direction after passing through the reflective prism 223, so that the second light beam is separated from the first light beam in the horizontal direction.

As shown in FIG. 5(a), FIG. 5(b), and FIG. 6, a right-angle reflective prism can change a propagation direction of a light beam. Therefore, in different designs, it may be determined, based on a design requirement, whether to enable the first light beam to be emitted into the reflective prism, so as to change a propagation direction of the first light beam. Specifically, two reflective prisms may be set, so that a first right-angle edge of a first reflective prism is parallel to the principal optical axis of the optical assembly, a second right-angle edge is perpendicular to the principal optical axis, the first light beam is emitted into the first reflective prism, and the first light beam is vertically emitted into the first right-angle edge of the first reflective prism. In this case, the first light beam is emitted perpendicular to the second right-angle edge of the first reflective prism, that is, the first light beam is emitted in parallel to the principal optical axis. The second light beam is set perpendicular to the principal optical axis, but a first right-angle edge of a reflective prism is not parallel to the principal optical axis. To be specific, the second light beam is emitted into the second reflective prism, and the second light beam is not perpendicular to the first right-angle edge of the second reflective prism. In this case, an emission direction of the second light beam is not perpendicular to a second right-angle edge of the second reflective prism, that is, the second light beam is not parallel to the principal optical axis, and a direction in the horizontal direction is not parallel to the principal optical axis. In this way, the emitted first light beam and the emitted second light beam are separated in the horizontal direction. Alternatively, two reflective prisms may be set, and the first light beam is not vertically emitted into a first right-angle edge of a first reflective prism, and the second light beam is not vertically emitted into a second right-angle edge of a second reflective prism, so that after the first light beam passes through the first reflective prism and the second light beam passes through the second reflective prism, directions of the first light beam and the second light beam in the horizontal direction are not parallel to the principal optical axis of the optical assembly. In this way, the emitted first light beam and the emitted second light beam are separated in the horizontal direction.

In a polar coordinate system, if the laser emitting apparatus 20 is used as an origin of the polar coordinate system, angles of spread of the first spot and the second spot emitted from the laser emitting apparatus 20 are different. Optionally, a difference between an angle of spread of the first spot and an angle of spread of the second spot in the horizontal direction is 0.3 to 0.6 degrees. For example, when the first spot is parallel to the principal optical axis, the angle of spread of the first spot in the horizontal direction may be set to 0 degrees, and the angle of spread of the second spot in the horizontal direction is changed to -0.5 degrees by using the optical assembly. In this case, a difference between the angles of spread of the first spot and the second spot in the horizontal direction is 0.5 degrees. If the difference between the angles of spread of the first spot and the second spot is excessively small, imaging areas of echoes of the first spot and the second spot are close to an imaging area of a ghost image, which is not conducive to avoiding a problem of a symmetric ghost image. If the difference between the angles of spread of the first spot and the second spot is excessively large, subsequent data processing may be adversely affected. Therefore, a proper difference of angles of spread may be correspondingly designed based on a distance between the laser emitting apparatus 20 and a target object, a size of the target object, or another requirement of a user. Based on different scenarios and requirements, a difference between the angles of spread of the first spot and the second spot in the horizontal direction may be greater than 0.6 degrees, or may be less than 0.3 degrees. This is not limited in this application.

In a possible design, the optical assembly 22 may further include a first wedge prism 224 and a second wedge prism 225. The first wedge prism 224 and the second wedge prism 225 are configured to splice the first spot and the second spot in the vertical direction.

As described above, the "vertical direction" in this embodiment of this application is a direction perpendicular to the "horizontal direction" in this embodiment of this application, and is not limited to a vertical direction in spatial coordinates. For example, if the first spot and the second spot are linear spots in the horizontal direction in the spatial coordinates, and scanning is performed in the vertical direction, the first spot and the second spot may alternatively be separated in the vertical direction in the spatial coordinates, and are spliced in the horizontal direction of the spatial coordinates by using the wedge prism.

In this embodiment of this application, "splicing" means that there is no gap between the first spot and the second spot in the vertical direction. The first spot and the second spot may have an overlapping part in the vertical direction, as shown in FIG. 3. Alternatively, the first spot and the second spot may be exactly connected in the vertical direction, as shown in FIG. 7.

Due to various limitations on an optical path design, for example, limited by placement of various optical devices and a size limitation of the entire laser emitting apparatus, there may be a gap between the generated first light beam and the generated second light beam in the vertical direction. Alternatively, the fields of view of the first light beam and the second light beam are adjusted to respective preset fields of view, but there are excessive overlapping parts. Consequently, a field of view obtained after the first light beam and the second light beam are spliced is less than a preset field of view. In this case, an emergent angle of the first light beam and/or an emergent angle of the second light beam in the vertical direction may be adjusted by using the wedge prism, that is, the first light beam and/or the second light beam are/is translated in the vertical direction, to implement splicing of the first light beam and the second light beam. The wedge prism does not affect the angles of spread of the first light beam and the second light beam in the horizontal direction. Specifically, the emergent angle of the first light beam may be adjusted in the vertical direction by using the first wedge prism 224, and the emergent angle of the second light beam may be adjusted in the vertical direction by using the second wedge prism 225, so that there is no gap between the formed first spot and the formed second spot in the vertical direction. In addition, a case in which a field of view formed by the first spot and the second spot in the vertical direction cannot reach a preset field of view because of a large quantity of overlapping parts can be avoided, thereby avoiding a case in which some areas cannot be scanned when a target object is scanned. Alternatively, only one wedge prism may be used to adjust the first light beam or the second light beam, to implement splicing of the formed first spot and the formed second spot.

In addition, in addition to the wedge prism, another device that can translate a light beam may be used, to adjust the light beam in the vertical direction.

Widths of the first spot and the second spot in the vertical direction may be represented by using a field of view in a polar coordinate system. As shown in FIG. 8, the laser emitting apparatus 20 is used as an origin of a polar coordinate system, the first light beam and the second light beam are emitted from the origin, a field of view of the formed first spot in the vertical direction is θ degrees, and a field of view of the formed second spot in the vertical direction is -θ degrees, that is, the first spot can cover a viewing field of 0 to θ degrees in space, and the second spot can cover a viewing field of 0 to -θ degrees in space. Therefore, a field of view obtained after the first spot and the second spot are spliced in the vertical direction is 20 degrees. In the foregoing example, the first spot and the second spot have a same field of view size, and the first spot and the second spot do not overlap in the vertical direction. However, this is not limited in this application. The first spot and the second spot may alternatively have different field of view sizes, and the first spot and the second spot may alternatively have an overlapping part in the vertical direction. In this case, the field of view obtained after the first spot and the second spot are spliced is a field of view obtained by subtracting the overlapping part from a sum of the field of view of the first spot and the field of view of the second spot. In an actual application, a corresponding splicing field of view may be designed based on an actual requirement. For example, the splicing field of view of the first spot and the second spot in the vertical direction may be set to 25 to 30 degrees. Certainly, based on different scenarios and requirements, the splicing field of view of the first spot and the second spot in the vertical direction may alternatively be greater than 30 degrees or less than 25 degrees. This is not limited in this application.

Optionally, the optical assembly 22 may further include a homogenizer, so that both the first light beam and the second light beam are incident to the homogenizer and are emitted from the homogenizer. Due to a characteristic of a light wave, energy distribution of a generated light beam at different positions may be different. The homogenizer can convert the light beam into a spot with uniform energy distribution, that is, light intensity at different positions on the spot is approximately equal, thereby avoiding impact of uneven energy distribution of the spot on a scanning result. In addition, the homogenizer can further control the first spot and the second spot to be within their respective preset field of view in the vertical direction. For example, if the preset fields of view of the first spot and the second spot in the vertical direction are both 14 degrees, and the preset field of view after splicing is 26 degrees, but the field of view of the generated first light beam and second light beam in the vertical direction may be greater than 14 degrees, the field of view of the spots formed by the first light beam and the second light beam in the vertical direction may be changed to 14 degrees by using the homogenizer.

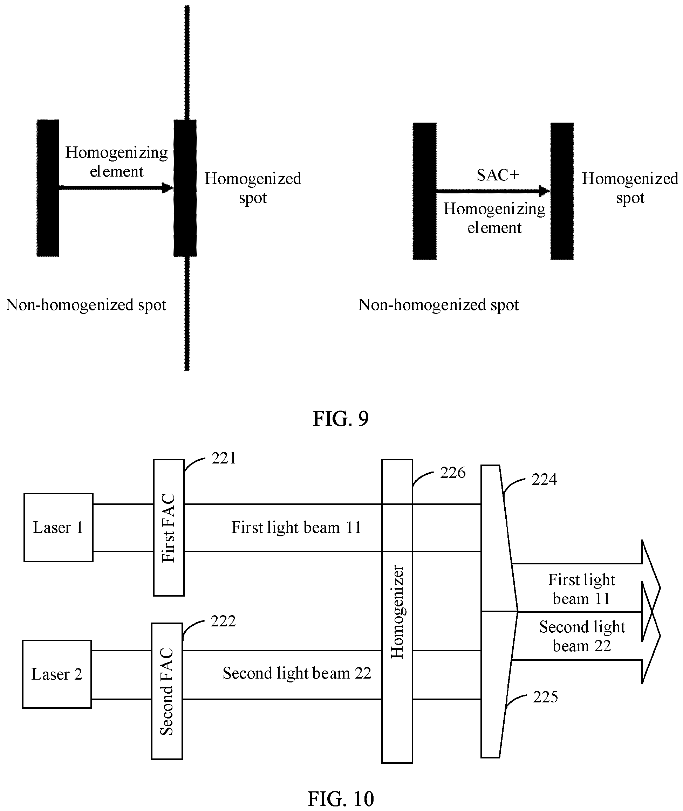

The homogenizer may include a slow axis collimator (slow axis collimator, SAC) and a homogenizing optical element. The first light beam and the second light beam may first be collimated by the slow axis collimator and then pass through the homogenizing element, which helps reduce light intensity outside the preset field of view, as shown in FIG. 9. The homogenizing optical element may be a homogenizing microlens array or a homogenizing diffractive optical element (DOE).

When the optical assembly 22 includes a collimator (that is, the first collimator 221 and the second collimator 222 in the foregoing embodiment) and a homogenizer, the homogenizer may be disposed after the collimator. An example in which the preset fields of view of the first spot and the second spot in the vertical direction are both 14 degrees is still used. If the first light beam and the second light beam first pass through the homogenizer before passing through the collimator, the fields of view of the first light beam and the second light beam have been adjusted to 14 degrees after passing through the homogenizer. However, the first light beam and the second light beam that have been homogenized pass through the first collimator 221 and the second collimator 222 respectively, so that the first light beam and the second light beam may be extended to exceed the preset field of view. If an actual field of view of the first light beam and the second light beam in the vertical direction exceeds the preset field of view, an imaging area of a symmetric ghost image may not be an estimated imaging area, and data of the symmetric ghost image may still be read when imaging data is obtained, which is unfavorable to recognition of a target object.

In a possible implementation, the light beam generation apparatus 21 may include a first light beam generation apparatus and a second light beam generation apparatus; the first light beam generation apparatus includes a first laser light source, and the first laser light source includes at least one laser configured to generate the first light beam; and the second light beam generation apparatus includes a second laser light source, and the second laser light source includes at least one laser configured to generate the second light beam. In this implementation, the first light beam may be generated by at least one laser, and the second light beam may also be generated by at least one laser, and lasers used to generate the first light beam and the second light beam are different. In this case, light intensity of the first light beam and the second light beam can be effectively ensured, and the first light beam and the second light beam are generated by using different lasers, so that light splitting does not need to be performed on light beams generated by a same laser by using an optical splitter, thereby reducing complexity of an optical path design.

Certainly, only one laser light source may be used, that is, the first laser light source and the second laser light source are a same laser light source, and a light beam generated by one laser light source is divided into two light beams by using an optical splitting apparatus. In this implementation, because only one laser light source is used, the laser light source can be saved, that is, costs of the laser emitting apparatus can be reduced.

In a specific embodiment, an optical path diagram of the laser emitting apparatus 20 may be shown in FIG. 10, and a perspective of FIG. 10 is used to indicate an optical path in a slow axis direction. A laser 1 generates the first light beam 11, the first light beam 11 is emitted into the first collimator 221 from the focus of the first collimator 221, and the emergent first light beam 11 does not change in a fast axis direction (a direction perpendicular to the paper) and a slow axis direction (a direction parallel to the paper). The emergent first light beam 11 is emitted into the homogenizer 226, the first light beam 11 emitted from the homogenizer 226 is input into the first wedge prism 224, and the first light beam 11 emitted from the first wedge prism 224 deviates on the slow axis. A laser 2 generates the second light beam 22, and the second light beam 22 is emitted into the second collimator 222. However, the second light beam 22 is not located on a principal optical axis of the second collimator 222. The emergent second light beam 22 does not change in the slow axis direction, and deviates on the fast axis direction (the direction perpendicular to the paper). The second light beam 22 is emitted into the homogenizer 226, a light emitted from the homogenizer 226 is emitted into the second wedge prism 225, and the second light beam 22 emitted from the second wedge prism 225 deviates on the slow axis, so that the first spot formed by the first light beam 11 and the second spot formed by the second light beam 22 are separated in the fast axis direction, and are spliced with no gap in the slow axis direction.

In a specific embodiment shown in FIG. 10, the first light beam and the second light beam first pass through the collimator, then pass through the homogenizer, and then pass through the wedge prism. It should be understood that a position relationship between the collimator, the homogenizer, and the wedge prism is merely an example. This is not limited in this embodiment of this application. Alternatively, the position relationship between the collimator, the homogenizer, and the wedge prism may be adjusted based on a design requirement. For example, the first light beam and the second light beam may first pass through the collimator, then pass through the wedge prism, and then pass through the homogenizer.

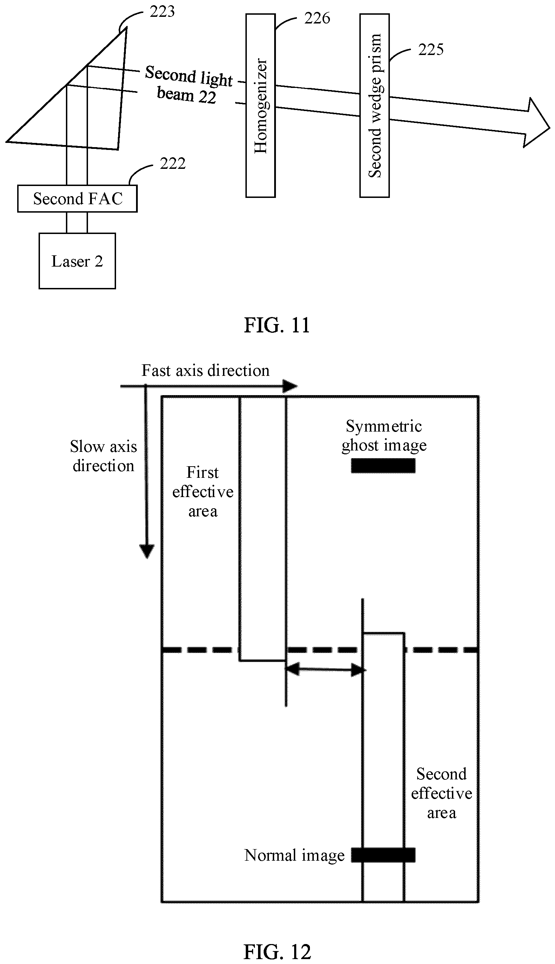

In another specific embodiment, an optical path diagram of the laser emitting apparatus 20 may be shown in FIG. 11, and a perspective of FIG. 11 is used to indicate an optical path in a fast axis direction. A laser 1 generates the first light beam 11, and an optical path of the first light beam 11 is similar to that shown in FIG. 10, and therefore is not shown in FIG. 11. A laser 2 generates the second light beam 22, the second light beam 22 is emitted into the second collimator 222 from a focus of the second collimator 222, and the emergent second light beam 22 does not change in a fast axis direction (a direction parallel to the paper) and a slow axis direction (a direction perpendicular to the paper). After the second light beam 22 is emitted, the second light beam 22 is input into the first right-angle edge of the reflective prism 223, but the second light beam 22 is not perpendicular to the first right-angle edge of the reflective prism 223, so that the emergent second light beam 22 deviates in the fast axis direction. The second light beam 22 is emitted into the homogenizer 226, a light emitted from the homogenizer 226 is input into the second wedge prism 225, and the second light beam 22 emitted from the second wedge prism 225 does not change in the fast axis direction, and deviates in the slow axis direction (the direction perpendicular to a paper). The first spot formed by the first light beam 11 and the second spot formed by the second light beam 22 are separated in the fast axis direction, and are spliced with no gap in the slow axis direction.

In a specific embodiment shown in FIG. 11, the second light beam sequentially passes through the collimator, the reflective prism, the homogenizer, and the wedge prism. It should be understood that a position relationship between the four optical devices is merely an example. This is not limited in this embodiment of this application. Alternatively, the position relationship between the optical devices may be adjusted based on a design requirement. For example, the second light beam may sequentially pass through the reflective prism, the collimator, the wedge prism, and the homogenizer.

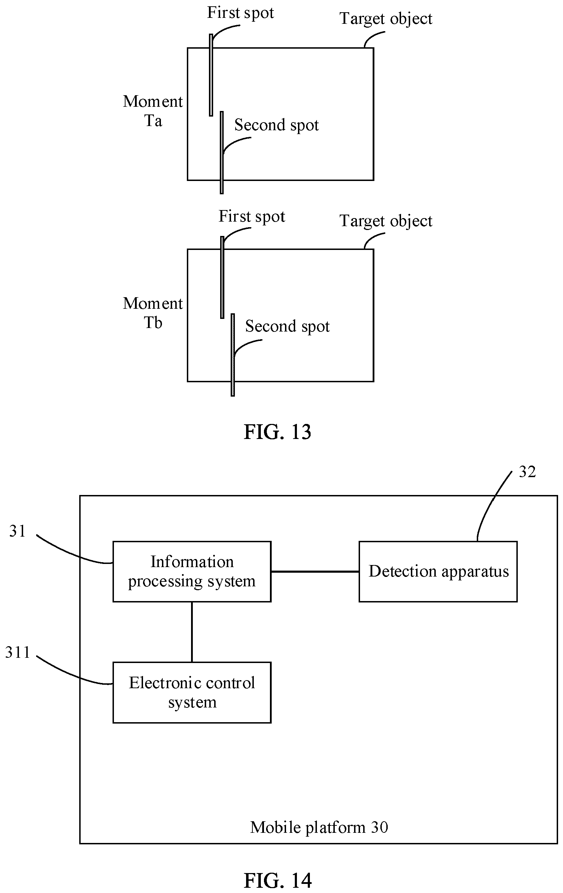

In the laser emitting apparatus provided in the foregoing embodiment of this application, because the two spots emitted by the laser emitting apparatus are separated in the horizontal direction, echoes of the two spots are also separated in the horizontal direction accordingly. This helps avoid a problem of generating a symmetric ghost image, thereby helping provide recognition precision of the laser radar. As shown in FIG. 13, after the laser emitting apparatus is used, although the first spot and the second spot are not projected on a same straight line of the target object at a same moment, the second spot at a moment Ta and the first spot at a moment Tb are located on a same straight line of the target object, and a position of the straight line on the target object may be detected by using a post-processing algorithm.

An embodiment of this application further provides a detection apparatus. The detection apparatus may include the laser emitting apparatus 20 described in any one of the foregoing implementations, to resolve a problem of a symmetric ghost image, and help improve recognition precision of the detection apparatus.

In addition, the detection apparatus may further include a receiving apparatus. The receiving apparatus includes a detector, configured to collect echo data of a first spot and a second spot. The detector includes a first effective area and a second effective area, which respectively correspond to an imaging area of an echo of the first spot and an imaging area of an echo of the second spot. In a conventional laser radar receiving apparatus, a data reading area of a detector may be shown in FIG. 1, and is an imaging area of an echo corresponding to a linear spot. The imaging area is not separated in a horizontal direction, and an imaging area of a symmetric ghost image is in the data reading area. Therefore, if the symmetric ghost image is generated, data of the symmetric ghost image is also read and used for object detection and recognition, which adversely affects subsequent target object recognition. In this embodiment of this application, the first effective area and the second effective area respectively correspond to the imaging area of the echo of the first spot on the detector and the imaging area of the echo of the second spot on the detector. As shown in FIG. 12, because the first spot and the second spot are separated in the horizontal direction, the first effective area and the second effective area corresponding to the first spot and the second spot are also separated in the horizontal direction. Because the first spot and the second spot jointly form a field of view of the laser emitting apparatus in a vertical direction, and the first spot and the second spot only have a small overlapping area, the corresponding first effective area and the second effective area also jointly form a receiving area of the laser emitting apparatus in the vertical direction, and the first effective area and the second effective area only have a small overlapping area or are just connected without an overlapping area in the vertical direction. Therefore, the first effective area and the second effective area avoid the imaging area of the symmetric ghost image. Only data in the first effective area and the second effective area is read, so that a problem of a symmetric ghost image can be avoided, thereby improving precision of subsequent target object recognition.

As shown in FIG. 14, an embodiment of this application further provides a mobile platform 30, including an information processing system 31 and the foregoing detection apparatus 32. The detection apparatus 32 is configured to determine information about an illuminated object. For specific implementation of the detection apparatus 32, refer to the foregoing embodiment. Repeated parts are not described again. The information processing system 31 is configured to determine feature information of the illuminated object based on a reflected light beam received by the detector in the detection apparatus 32 and an emergent light beam generated by a laser light source, where the feature information includes but is not limited to information such as a target distance, an orientation, a height, a speed, a posture, and even a shape. For example, the information processing system 31 may accurately measure propagation time of a light pulse generated by the laser light source from being emitted to being reflected back to the detector by the illuminated object. Because the speed of light is known, the propagation time may be converted into measurement of a distance, to determine a distance from the detection apparatus 32 to the illuminated object.

During specific implementation, the information processing system 31 may be a hardware apparatus in various forms such as a processor, a microprocessor (such as a digital signal processor, DSP), an AI chip (such as a field programmable gate array, FPGA), and an application-specific integrated circuit (application-specific integrated circuit, ASIC).

Further, if the laser light source continuously scans the illuminated object by using pulse laser, data of all target points on the illuminated object may be obtained. After the information processing apparatus in the receiving apparatus performs imaging processing by using the data, a precise three-dimensional stereoscopic image can be obtained.

The mobile platform 30 further includes an electronic control system 311 coupled to the foregoing information processing system 31. The electronic control system 311 includes a communication interface, and communicates with the information processing system 31 through the communication interface. The electronic control system 311 is configured to control a motion status of the mobile platform 30 based on the feature information of the illuminated object.

For example, the mobile platform 30 is a self-driving vehicle. The self-driving vehicle includes the detection apparatus 32, the information processing system 31, and the electronic control system 311. The electronic control system 311 may be an electronic control unit (electronic control unit, ECU), that is, an in-vehicle computer. When the detection apparatus 32 identifies that an obstacle exists in front of the vehicle, and the information processing system 31 calculates feature information of the obstacle, the electronic control system 311 may control, based on the feature information of the obstacle and with reference to navigation information (such as a map), a driving apparatus of the self-driving vehicle to decelerate, stop, or turn around. Alternatively, when the detection apparatus 32 and the information processing system 31 determine that there is no obstacle, the electronic control system 311 may control, based on the foregoing information indicating that there is no obstacle, a driving apparatus of the self-driving vehicle to travel at a uniform speed or travel at an accelerated speed.

In an optional embodiment, a specific type of the mobile platform 30 is not limited. For example, the mobile platform may be a mobile platform such as a vehicle, a ship, an airplane, a train, spacecraft, or an uncrewed aerial vehicle, which is applicable to the technical solutions of this application.

In addition, the mobile platform 30 may further include a global positioning system (global positioning system, GPS) apparatus and an inertial measurement unit (inertial measurement unit, IMU) apparatus. The detection apparatus 32 and the information processing system 31 may obtain the feature information such as a position and a speed of the illuminated object based on measurement data of the GPS apparatus and the IMU apparatus. For example, the information processing system 31 may provide geographical position information of the mobile platform by using the GPS apparatus in the mobile platform 30, and record a posture and steering information of the mobile platform by using the IMU apparatus. After a distance between the detection apparatus 32 and the illuminated object is determined based on an emergent light beam and a reflected light beam of the detection apparatus 32, a measurement point of the illuminated object may be converted from a position point in a relative coordinate system to a position point in an absolute coordinate system by using at least one of geographical position information provided by the GPS apparatus or posture and steering information provided by the IMU apparatus, to obtain geographical position information of the illuminated object, so that the detection apparatus 32 may be applied to the mobile platform.

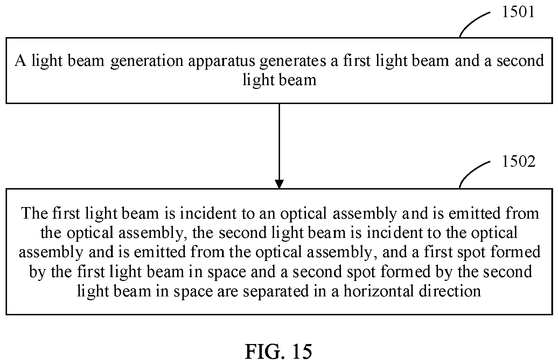

An embodiment of this application further provides a laser emitting method. The method may be applied to a laser emitting apparatus, and the laser emitting apparatus includes a light beam generation apparatus and an optical assembly. As shown in FIG. 15, the laser emitting method may include the following steps.

Step 1501: The light beam generation apparatus generates a first light beam and a second light beam.

Step 1502: The first light beam is incident to the optical assembly and is emitted from the optical assembly, the second light beam is incident to the optical assembly and is emitted from the optical assembly, and a first spot formed by the first light beam in space and a second spot formed by the second light beam in space are separated in a horizontal direction.

In a possible implementation, the first light beam and the second light beam belong to a same beam.

In a possible implementation, the first light beam and the second light beam are generated by different lasers.

In a possible implementation, the optical assembly includes a first collimator and a second collimator; and that the first light beam is incident to the optical assembly includes: the first light beam is incident to the optical assembly from above or below a focus of the first collimator; and/or the second light beam is incident to the optical assembly includes: the second light beam is incident to the optical assembly from above or below a focus of the second collimator.

Optionally, the first collimator and the second collimator may be fast axis collimators.

In a possible implementation, the optical assembly includes a reflective prism; and that the second light beam is incident to the optical assembly includes: the second light beam is not perpendicular to a right-angle edge of the reflective prism.

In a possible implementation, the optical assembly further includes a first wedge prism and a second wedge prism; and that the first light beam is incident to the optical assembly includes: the first light beam is incident to the first wedge prism; and that the second light beam is incident to the optical assembly includes: the second light beam is incident to the second wedge prism.

In a possible implementation, the optical assembly further includes a homogenizer.

In a possible implementation, a splicing field of view of the first spot and the second spot in a vertical direction is 25 to 30 degrees.

In a possible implementation, a difference between an angle of spread of the first spot and an angle of spread of the second spot in the horizontal direction is 0.3 to 0.6 degrees.

In addition, it should be understood that, in the description of this application, terms such as "first", "second", and "third" are merely used for distinguishing and description, but should not be understood as an indication or implication of relative importance, or should not be understood as an indication or implication of a sequence. Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "contain", "include", "have", and variations thereof all mean "including but not limited to", unless otherwise specifically emphasized.

The foregoing descriptions are merely specific implementations of this application, but are not intended to limit the protection scope of this application. Any variation or replacement figured out by a person skilled in the art based on the technical solutions of this application within the technical scope disclosed in this application shall fall within the protection scope of this application. Therefore, the protection scope of this application shall be subject to the protection scope of the claims.

## Claims

1. A laser emitting apparatus, comprising a light beam generation apparatus and an optical assembly, wherein
the light beam generation apparatus is configured to generate a first light beam and a second light beam, wherein
the first light beam is incident to the optical assembly and is emitted from the optical assembly, the second light beam is incident to the optical assembly and is emitted from the optical assembly, and a first spot formed by the first light beam in space and a second spot formed by the second light beam in space are separated in a horizontal direction.

2. The laser emitting apparatus according to claim 1, wherein the first light beam and the second light beam belong to a same beam.

3. The laser emitting apparatus according to claim 1 or 2, wherein the light beam generation apparatus comprises a first light beam generation apparatus and a second light beam generation apparatus;
the first light beam generation apparatus comprises a first laser light source, and the first laser light source comprises at least one laser, to generate the first light beam; and
the second light beam generation apparatus comprises a second laser light source, and the second laser light source comprises at least one laser, to generate the second light beam.

4. The laser emitting apparatus according to any one of claims 1 to 3, wherein the optical assembly comprises a first collimator and a second collimator;
the first light beam is incident to the first collimator from a first position, and the first position is located on a focal plane of the first collimator;
the second light beam is incident to the second collimator from a second position, and the second position is located on a focal plane of the second collimator; and
the first position is located above or below a focus of the first collimator, and/or the second position is located above or below a focus of the second collimator.

5. The laser emitting apparatus according to any one of claims 1 to 3, wherein the optical assembly comprises a reflective prism, the second light beam is incident to a right-angle edge of the reflective prism, and the second light beam is not perpendicular to the right-angle edge.

6. The laser emitting apparatus according to claim 4 or 5, wherein the optical assembly further comprises a first wedge prism and a second wedge prism; and
the first wedge prism and the second wedge prism are configured to splice the first light beam and the second light beam in a vertical direction.

7. The laser emitting apparatus according to any one of claims 4 to 6, wherein the optical assembly further comprises a homogenizer.

8. The laser emitting apparatus according to any one of claims 1 to 7, wherein a splicing field of view of the first spot and the second spot in the vertical direction is 25 to 30 degrees.

9. The laser emitting apparatus according to any one of claims 1 to 8, wherein a difference between an angle of spread of the first spot and an angle of spread of the second spot in the horizontal direction is 0.3 to 0.6 degrees.

10. A detection apparatus, wherein the detection apparatus comprises the laser emitting apparatus according to any one of claims 1 to 9.

11. The detection apparatus according to claim 10, wherein the detection apparatus further comprises a receiving apparatus; and
the receiving apparatus comprises a detector, wherein the detector comprises a first effective area and a second effective area, the first effective area and the second effective area respectively correspond to an imaging area of an echo of the first spot on the detector and an imaging area of an echo of the second spot on the detector, and the first effective area and the second effective area are separated in a horizontal direction.

12. A mobile platform, comprising the detection apparatus according to claim 11.

13. A laser emitting method, applied to a laser emitting apparatus, wherein the laser emitting apparatus comprises a light beam generation apparatus and an optical assembly, and the method comprises:
generating, by the light beam generation apparatus, a first light beam and a second light beam, wherein
the first light beam is incident to the optical assembly and is emitted from the optical assembly, the second light beam is incident to the optical assembly and is emitted from the optical assembly, and a first spot formed by the first light beam in space and a second spot formed by the second light beam in space are separated in a horizontal direction.

14. The method according to claim 13, wherein the first light beam and the second light beam belong to a same beam.

15. The method according to claim 13 or 14, wherein the first light beam and the second light beam are generated by different lasers.

16. The method according to any one of claims 13 to 15, wherein the optical assembly comprises a first collimator and a second collimator; and
that the first light beam is incident to the optical assembly comprises: the first light beam is incident to the optical assembly from above or below a focus of the first collimator; and/or
that the second light beam is incident to the optical assembly comprises: the second light beam is incident to the optical assembly from above or below a focus of the second collimator.

17. The method according to any one of claims 13 to 15, wherein the optical assembly comprises a reflective prism; and
that the second light beam is incident to the optical assembly comprises:
the second light beam is not perpendicular to a right-angle edge of the reflective prism.

18. The method according to claim 16 or 17, wherein the optical assembly further comprises a first wedge prism and a second wedge prism; and
that the first light beam is incident to the optical assembly comprises: the first light beam is incident to the first wedge prism; and/or
that the second light beam is incident to the optical assembly comprises: the second light beam is incident to the second wedge prism.

19. The method according to any one of claims 16 to 18, wherein the optical assembly further comprises a homogenizer.

20. The method according to any one of claims 13 to 19, wherein a splicing field of view of the first spot and the second spot in a vertical direction is 25 to 30 degrees.

21. The method according to any one of claims 13 to 20, wherein a difference between an angle of spread of the first spot and an angle of spread of the second spot in the horizontal direction is 0.3 to 0.6 degrees.
